# EUROPEAN PATENT APPLICATION

(11) **EP 4 582 891 A1**
(43) Date of publication of application: **09.07.2025**
(21) Application number: 24218441.4
(22) Date of filing: 09.12.2024
(51) Int. Cl.: G05B 23/02, G05B 15/02, G08B 29/14, G08B 29/18

(54) **METHODS FOR PREDICTING SENSOR FAILURE IN A SECURITY SYSTEM**

(30) Priority: 03.01.2024 US 202418403696
(71) Applicant: Honeywell International Inc., Charlotte, NC 28202 (US)
(72) Inventor: DESHPANDE, Surekha, Charlotte, 28202 (US); SAMAGA, Asha, Charlotte, 28202 (US)
(74) Representative: Haseltine Lake Kempner LLP

(57) **Abstract**

A building control system may include a controller and a number of sensors. The controller may be configured to predict whether one or more of the sensors are likely to malfunction. The controller may be configured to predict a malfunction of a sensor via a process in which resistance values associated with the sensor are monitored over time. The controller may be configured to predict a malfunction of a sensor via a process in which a walk test of the sensor is captured via video and then analyzed. The controller may be configured to predict a malfunction of a sensor via a process in which a number of times that a sensor is bypassed when the building control system is armed. The controller may be configured to predict a malfunction of a sensor via a process in which trigger events among a cross-zone pair of sensors are monitored.

## Description

### TECHNICAL FIELD

The present disclosure relates generally to security systems employing a plurality of sensors and more particularly to predicting sensor failure of a sensor in a security system.

### BACKGROUND

A variety of different building control systems employ sensors. An example includes a security system. A security system may include a large number of sensors such as door sensors, window sensors, glass break sensors, motion sensors and others. A security system only works as well as its sensors. When sensors fail, the security system will become compromised. Some sensors are more critical to the functionality of the security system than others. Being able to replace sensors before they fail can be beneficial in maintaining the performance of the security system. What would be desirable are methods and systems for predicting that a particular sensor is likely to fail, so that the particular sensor can be replaced before the sensor completely fails and compromises the performance of the security system.

### SUMMARY

The present disclosure relates generally to security systems employing a plurality of sensors and more particularly to predicting sensor failure in a security system. An example may be found in a method for predicting a sensor malfunction of a sensor in a building control system using one or more approaches.

In some cases, the method may include predicting the sensor will malfunction by monitoring a resistance value associated with the sensor of the building control system for fluctuations in the resistance value over time. In this instance, the building control system may be a security system, an HVAC system, a lighting system, a fire system or any other building control system. The resistance value associated with the sensor has a predetermined normal resistance range, wherein the normal resistance range has a central resistance normal region bracketed by an upper resistance normal region and a lower resistance normal region. A determination may be made as to when the resistance value associated with the sensor begins to deviate from the central resistance normal region into the upper resistance normal region and/or the lower resistance normal region by more than a threshold amount, and when so, predicting that the sensor will malfunction and sending an alert that the sensor is predicted to malfunction.

In some cases, the illustrative method may include predicting the sensor will malfunction by capturing a walk test of the sensor using a video camera, resulting in a walk test video, and processing the walk test video using video analytics to determine a time spent on the walk test of the sensor. The method may include monitoring trigger events of the sensor during the walk test and determining when a number of trigger events of the sensor is above zero but below an expected number of trigger events for the determined time spent on the walk test of the sensor, and when so, predicting that the sensor will malfunction and sending an alert that the sensor is predicted to malfunction.

In some cases, the method may include predicting the sensor will malfunction by monitoring a number of times that a zone of the security system that includes the sensor was bypassed by a user when activating or arming the security system over a period of time and determining when the number of times that the zone that includes the sensor was bypassed by the user over the period of time represents a measure that exceeds a threshold, and when so, predicting that one or more sensors in the bypassed zone will malfunction and sending an alert that one or more of the sensors in the bypassed zone is predicted to malfunction.

In some cases, the method may include predicting the sensor will malfunction by monitoring trigger events from each sensor of a cross-zone pair of sensors over a period of time, wherein one of the cross-zone pair of sensors includes the sensor, and based on the trigger events from each sensor of the cross-zone pair of sensors over the period of time, determining when the sensor is not triggering one or more events, and when so, predicting that the sensor will malfunction and sending an alert that the sensor is predicted to malfunction.

Another example may be found in a building control system. The building control system may be a security system. The illustrative building control system includes one or more sensors and a controller that is operatively coupled to the one or more sensors using one or more approaches.

In some cases, the controller may be configured to predict a sensor malfunction of a sensor of the one or more sensors by monitoring a resistance value associated with the sensor of the building control system for fluctuations in a resistance value over time. The resistance value associated with the sensor has a predefined normal resistance range, wherein the normal resistance range has a central resistance normal region bracketed by an upper resistance normal region and a lower resistance normal region. The controller may be configured to determine when the resistance value associated with the sensor begins to deviate from the central resistance normal region into the upper resistance normal region and/or the lower resistance normal region by more than a threshold amount, and when so, predicting that the sensor will malfunction and send an alert that the sensor is predicted to malfunction.

In some cases, the controller may be configured to predict that the sensor will malfunction by capturing a walk test of the sensor using a video camera, resulting in a walk test video and processing the walk test video using video analytics to determine a time spent on the walk test of the sensor. The controller may be configured to monitor trigger events of the sensor during the walk test, and to determine when a number of trigger events of the sensor is above zero but below an expected number of trigger events for the determined time spent on the walk test of the sensor, and when so, predict that the sensor will malfunction and send an alert that the sensor is predicted to malfunction.

In some cases, the controller may be configured to predict the sensor will malfunction by monitoring a number of times that a zone of the building control system that includes the sensor was bypassed by a user when activating or arming the building control system over a period of time, and determining when the number of times that the zone that includes the sensor was bypassed by the user over the period of time represents a measure that exceeds a threshold, and when so, predict that one or more sensors in the bypassed zone will malfunction and send an alert that one or more sensors in the bypassed zone is predicted to malfunction.

In some cases, the controller may be configured to predict the sensor will malfunction by monitoring trigger events from each sensor of a cross-zone pair of sensors over a period of time, wherein one of the cross-zone pair of sensors includes the sensor, and based on the trigger events from each sensor of the cross-zone pair of sensors over the period of time, determine when the sensor is not triggering one or more events, and when so, predict that the sensor will malfunction and send an alert that the sensor is predicted to malfunction.

Another example may be found in a non-transitory computer readable medium storing instructions that when executed cause one or more processors to predict a sensor malfunction of a sensor of a building control system using one or more approaches.

In some cases, the one or more processors may predict a sensor malfunction of a sensor of the one or more sensors by monitoring a resistance value associated with the sensor of the building control system for fluctuations in a resistance value over time. The resistance value associated with the sensor having a normal resistance range, wherein the normal resistance range has a central resistance normal region bracketed by an upper resistance normal region and a lower resistance normal region. The one or more processors may determine when the resistance value associated with the sensor begins to deviate from the central resistance normal region into the upper resistance normal region and/or the lower resistance normal region by more than a threshold amount, and when so, predicting that the sensor will malfunction and send an alert that the sensor is predicted to malfunction.

In some cases, the one or more processors may predict that the sensor will malfunction by capturing a walk test of the sensor using a video camera, resulting in a walk test video and processing the walk test video using video analytics to determine a time spent on the walk test of the sensor. The one or more processors may monitor trigger events of the sensor during the walk test, and determine when a number of trigger events of the sensor is above zero but below an expected number of trigger events for the determined time spent on the walk test of the sensor, and when so, predict that the sensor will malfunction and send an alert that the sensor is predicted to malfunction.

In some cases, the one or more processors may predict the sensor will malfunction by monitoring a number of times that a zone of the building control system that includes the sensor was bypassed by a user when activating or arming the building control system over a period of time, and determining when the number of times that the zone that includes the sensor was bypassed by the user over the period of time represents a measure that exceeds a threshold, and when so, predict that one or more sensors in the bypassed zone will malfunction and send an alert that one or more sensors in the bypassed zone is predicted to malfunction.

In some cases, the one or more processors may predict the sensor will malfunction by monitoring trigger events from each sensor of a cross-zone pair of sensors over a period of time, wherein one of the cross-zone pair of sensors includes the sensor, and based on the trigger events from each sensor of the cross-zone pair of sensors over the period of time, determine when the sensor is not triggering one or more events, and when so, predict that the sensor will malfunction and send an alert that the sensor is predicted to malfunction.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative building control system;
Figure 2 is a graphical representation of resistance characteristics of a sensor;
Figure 3 is a flow diagram showing an illustrative method for predicting a sensor malfunction;
Figure 4 is a flow diagram showing an illustrative method for predicting a sensor malfunction;
Figure 5 is a flow diagram showing an illustrative method for predicting a sensor malfunction; and
Figure 6 is a flow diagram showing an illustrative method for predicting a sensor malfunction.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

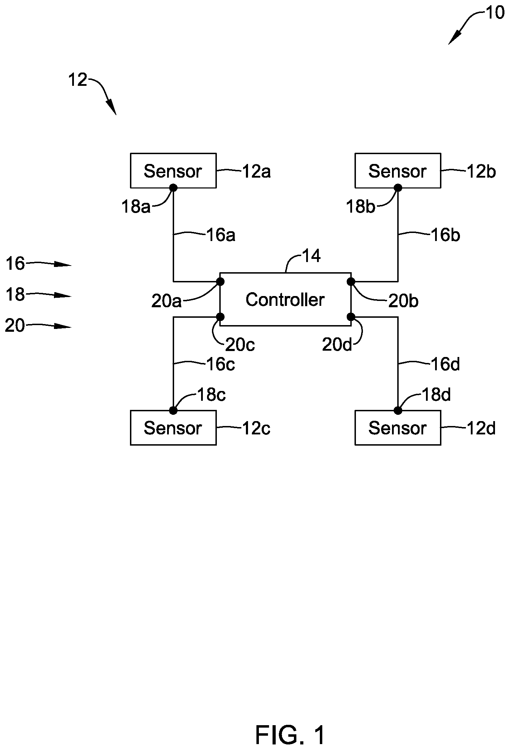

Figure 1 is a schematic block diagram showing an illustrative building control system 10 that may control any of a variety of different equipment within a building or other facility. As an example, the building control system 10 may represent a security system. In some instances, the building control system 10 may represent any of an HVAC (Heating, Ventilating and Air Conditioning) system, a lighting system, an access control system, and others. The building control system 10 includes a number of sensors 12, individually labeled as 12a, 12b, 12c and 12d. While a total of four sensors 12 are shown, it will be appreciated that the building control system 10 may include any number of sensors 12, and in some cases may include substantially more than four sensors 12. The sensors 12 may represent any of a variety of different types of sensors, including door sensors, window sensors, glass break detectors and motion sensors, for example, when the building control system 10 represents a security system. In some instances, at least one of the sensors 12 may be a video camera that may be used when performing a sensor walk test, for example.

In some instances, at least some of the sensors 12 may be considered to be cross-zone sensors, in which two (or more) of the sensors 12 are configured to work together to detect certain events. For example, a cross-zone pair of sensors may include a first motion sensor near an entry door and a second motion sensor down a hall from the entry door. The first motion sensor will be triggered by motion of a person entering the entry door, and the second motion sensor will be triggered by motion of a person moving down the hall. In one example, the cross-zone pair may be programmed to raise an alert or alarm when first motion sensor is triggered by motion followed by the second motion sensor triggered by motion within a predetermined time period (e.g. 10 seconds) from when the first motion sensor was triggered. In another example, the cross-zone pair may be programmed to raise an alert or alarm when first motion sensor is triggered by motion followed by the second motion sensor not being triggered by motion within the predetermined time period (e.g. 10 seconds) from when the first motion sensor was triggered. These are just examples.

The building control system 10 includes a controller 14 that controls operation of the building control system 10. In some instances, the controller 14 may be part of a security system control panel or may be in the cloud, for example. The controller 14 may be manifested within a computer such as a laptop computer or a desktop computer. In some cases, the controller 14 may be distributed across different components. For example, some functions of the controller may be incorporated into one or more of the sensors, the video camera, a security system control panel, the cloud and/or in any other suitable component.

In some instances, each of the sensors 12 may be operatively coupled with the controller 14 via a cable 16, individually labeled as 16a, 16b, 16c and 16d. Each of the cables 16 may represent pairs of wires, for example. In some instances, each of the cables 16 may be an Ethernet cable. The cables 16 may extend between a connector 18 proximate each sensor 12, individually labeled as 18a, 18b, 18c and 18d, and a connector 20 proximate the controller 14, individually labeled as 20a, 20b, 20c and 20d. The connectors 18 and 20 may represent wiring terminals, for example, or Ethernet jacks.

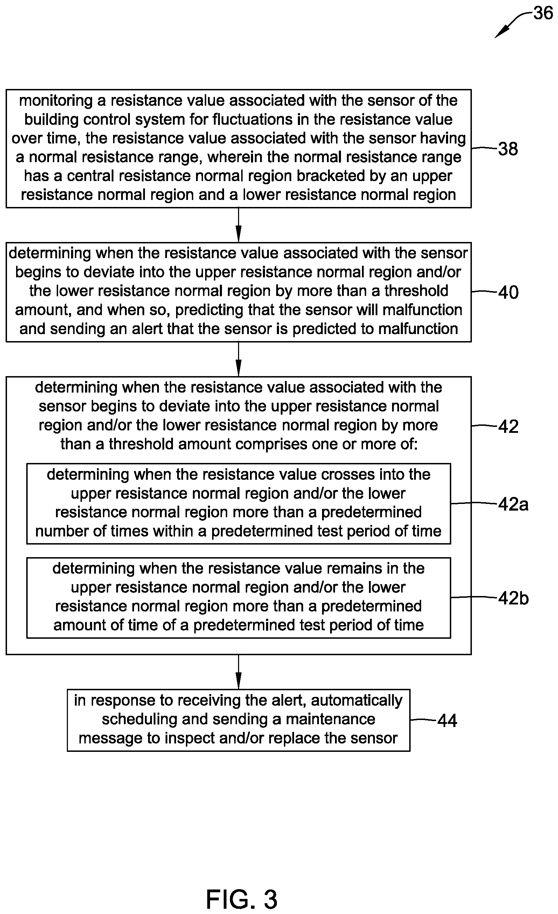

The controller 14 may be configured to predict whether one or more of the sensors 12 are likely to malfunction. In some instances, the controller 14 may be configured to carry out one or more of several different methods or processes. As an example, the controller 14 may be configured to predict malfunction of a sensor 12 via a process in which resistance values associated with the sensor 12 are monitored over time, as described for example in Figure 3. Resistance values may change as a result of a lose cable, a damaged cable, a bad connection or even a deterioration of the sensor itself, for example. In some instances, resistance variation of five to ten percent within a normal band may be tolerated, while resistance values that vary more than this on a regular basis (such as 3 or more times within a predetermined time period) may trigger an event to be raised. A triggered event may result in maintenance being performed. Maintenance may include checking and/or fixing a lose cable, a damaged cable, a bad connection, and/or replacing the sensor.

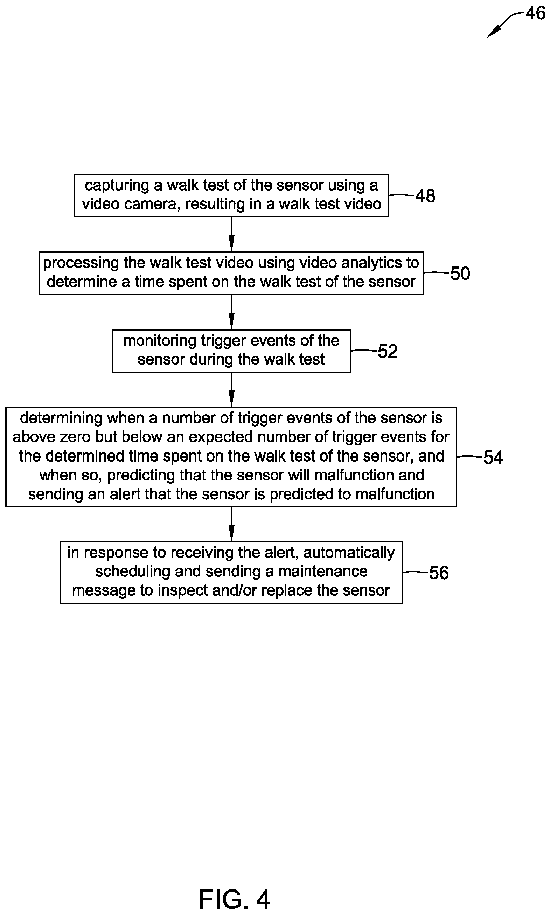

The controller 14 may be configured to predict malfunction of a sensor 12 via a process in which a walk test of the sensor 12 is captured via video and then analyzed, as described for example in Figure 4. During a walk test, an installer walks past a sensor such as a motion sensor in an attempt to trigger the sensor. If the operator needs to walk past a particular sensor multiple times before the sensor triggers, such as if the operator has to keep getting closer and closer to the sensor before the sensor triggers, this may be an indication that the sensor is becoming degraded. A walk test is watched and recorded via a video camera, and the resultant video clip is analyzed via video analytics to determine how quickly the operator triggers the sensor. In some cases, the trigger events of the sensor are monitored during the walk test and when the number of trigger events of the sensor is above zero (sensor is still somewhat functional) but below an expected number of trigger events for the determined time spent on the walk test of the sensor, predicting that the sensor will malfunction. The expected number of trigger events may include an expected threshold number, an expected threshold range, an expected clustering of trigger events in time, and/or any other measure of expected trigger events from the sensor during the walk test. An alert may be sent indicating that the sensor is predicted to malfunction.

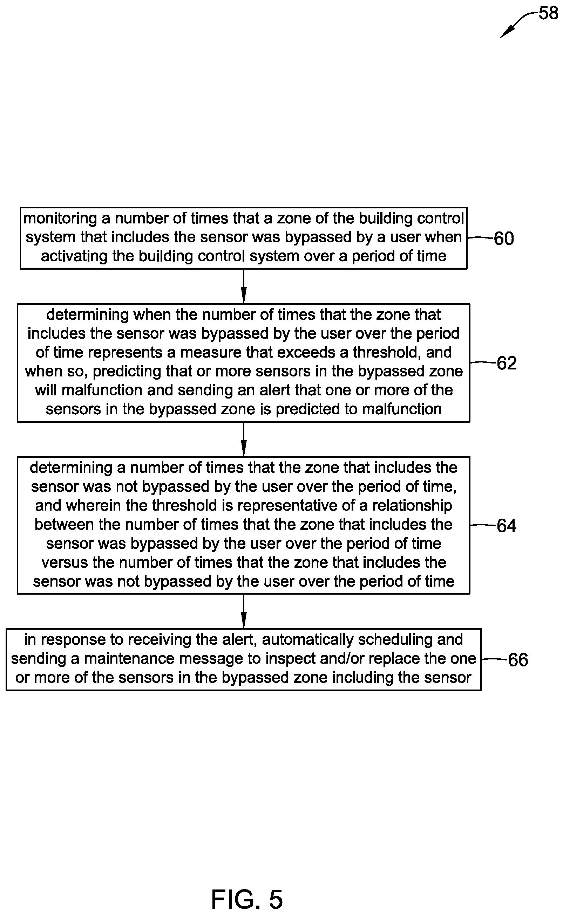

The controller 14 may be configured to predict malfunction of a sensor 12 via a process in which a number of times that a sensor 12 is bypassed when the building control system 10 is activated (e.g. armed), as described for example in Figure 5. In some cases, the building control system 10 may be a security system that can be armed and disarmed by a user. If a particular sensor 12 (or zone including the particular sensor 12) is repeatedly bypassed when arming the security system because the sensor is for example intermittently triggering a false positive as soon as the building control system 10 is activated, this can be an indication that the sensor (or one of the sensors in the bypassed zone) is deteriorating and may malfunction soon.

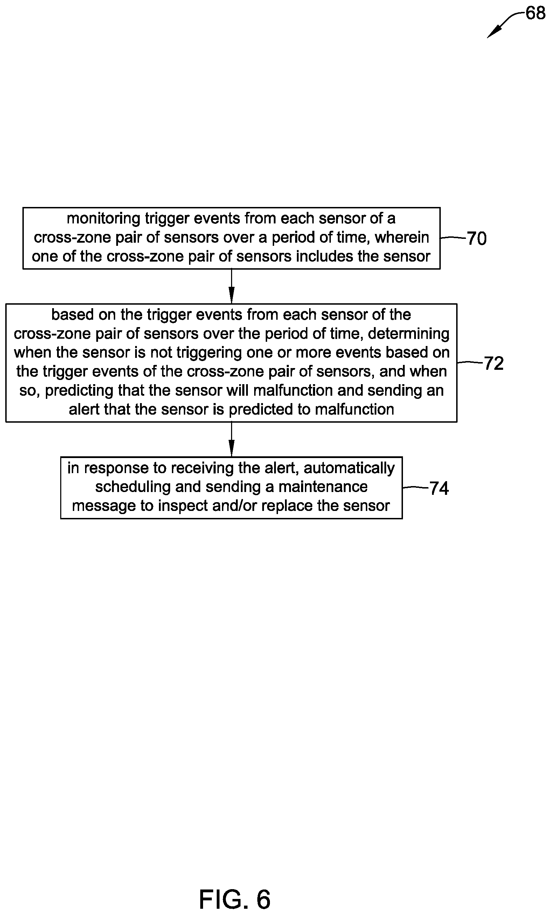

The controller 14 may be configured to predict malfunction of a sensor 12 via a process in which trigger events among a cross-zone pair of sensors is monitored, as described for example in Figure 6. If one sensor within a cross-zone pair repeatedly sees an event while the other sensor within the cross-zone pair intermittently does not see the same event, this can be an indication that the second sensor is deteriorating and may malfunction soon.

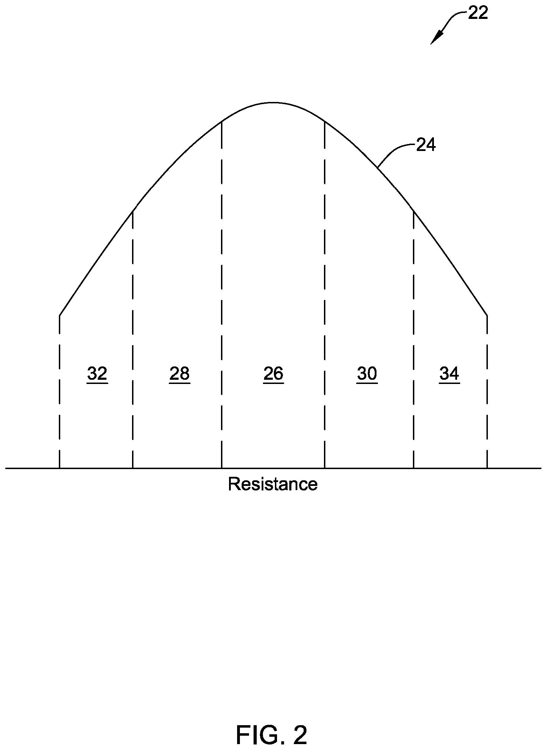

Figure 2 is a graphical representation of an expected distribution of resistance values 22 for a particular sensor 12. In Figure 2, a plotline 24 represents a distribution of resistances of a sensor, as seen from the controller 14. The area under the plotline 24 may be considered as being divided into several different resistance regions. Region 26 represents values within a central resistance normal region and represents normal and expected resistance values for the sensor when the sensor is new. Region 26 is bracketed on the left by a region 28 that represents a lower resistance normal region and is bracketed on the right by a region 30 that represents an upper resistance normal region. The central resistance normal region 26, the lower resistance normal region 28 and the upper resistance normal region 30 are all considered to be within the normal and acceptable resistance range for the particular sensor 12. However, the central resistance normal region 26 represents a tighter tolerance and preferred resistance range. As the sensor 12 and/or connection between the sensor 12 and the controller deteriorate, the resistance associated with the particular sensor 12 may begin to deviate from the central resistance normal region 26 and into the lower resistance normal region 28 and/or the upper resistance normal region 30. This can be detected and an alert may be issued.

Region 32 represents a lower resistance abnormal region and region 34 represents an upper resistance abnormal region. Resistance values within either the abnormal region 32 or the abnormal region 34 represent resistance values that would trigger an immediate alert. As resistance values trend over time into the lower resistance normal region (region 28), or farther into the lower resistance normal region, a suspicion may be raised that the particular sensor 12 (e.g. the sensor 12 and/or cabling 16 and/or connectors 18 between the sensor 12 and the controller 14) is expected to malfunction soon. As resistance values trend over time into the upper resistance normal region (region 30), or farther into the upper resistance normal region, a suspicion may be raised that the particular sensor 12 (e.g. the sensor 12 and/or cabling 16 and/or connectors 18 between the sensor 12 and the controller 14) is expected to malfunction soon.

To provide an illustrative but non-limiting numerical example, say that the region 26 is centered at a resistance value of 1000 Ohms and may extend from a minimum of 970 Ohms to a maximum of 1050 Ohms. The region 28 may extend from a minimum of 900 Ohms to a maximum of 970 Ohms. The region 30 may extend from a minimum of 1050 Ohms to a maximum of 1200 Ohms. The region 32 may represent resistance values that are lower than 900 Ohms. The region 34 may represent resistance values that are greater than 1200 Ohms. It will be appreciated that these numbers are merely representative, and may be considered as being germane to a particular type and/or brand of sensor and/or cabling, for example. Moreover, and in some cases, the expected resistance values may depend on the run length of the cabling from the controller 14 to the particular sensor 12. As such, and in some cases, the resistance values associated with the various regions 26-34 may be set different for each of the sensors 12a-12d. In some cases, the resistance values associated with the various regions 26-34 for each of the sensors 12a-12d may be set in accordance with a resistance value measured when the corresponding sensor 12a-12d was initially installed.

Figure 3 is a flow diagram showing an illustrative method 36 for predicting a sensor malfunction of a sensor (such as the sensors 12) in a building control system (such as the building control system 10). The controller 14 may be configured to carry out the method 36. The illustrative method 36 may include predicting the sensor will malfunction by monitoring a resistance value associated with the sensor of the building control system for fluctuations in the resistance value over time. The resistance value associated with the sensor has a normal resistance range, wherein the normal resistance range has a central resistance normal region bracketed by an upper resistance normal region and a lower resistance normal region, as indicated at block 38. In some instances, the resistance value associated with the sensor may include a resistance of a cable (such as the cables 16) to the sensor and/or a resistance of a connector (such as the connectors 18 and/or the connectors 20) to the sensor. In some instances, the resistance value associated with the sensor may include an input resistance of the sensor itself.

A determination may be made as to when the resistance value associated with the sensor begins to deviate into the upper resistance normal region and/or the lower resistance normal region by more than a threshold amount, and when so, predicting that the sensor will malfunction and sending an alert that the sensor is predicted to malfunction, as indicated at block 40. In some instances, determining when the resistance value associated with the sensor begins to deviate into the upper resistance normal region and/or the lower resistance normal region by more than a threshold amount may include several options, as indicated at block 42. Determining when the resistance value associated with the sensor begins to deviate into the upper resistance normal region and/or the lower resistance normal region by more than a threshold amount may include determining when the resistance value crosses into the upper resistance normal region and/or the lower resistance normal region more than a predetermined number of times within a predetermined test period of time, as indicated at block 42a. Determining when the resistance value associated with the sensor begins to deviate into the upper resistance normal region and/or the lower resistance normal region by more than a threshold amount may include determining when the resistance value remains in the upper resistance normal region and/or the lower resistance normal region more than a predetermined amount of time of a predetermined test period of time, as indicated at block 42b. In some instances, the method 36 may include in response to receiving the alert, automatically scheduling maintenance and sending a maintenance message to inspect and/or replace the sensor (e.g. the sensor, cabling, and/or connectors connecting the sensor and the controller).

Figure 4 is a flow diagram showing an illustrative method 46 for predicting a sensor malfunction of a sensor (such as the sensors 12) in a building control system (such as the building control system 10). The controller 14 may be configured to carry out the method 46. The illustrative method 46 includes capturing a walk test of the sensor using a video camera, resulting in a walk test video, as indicated at block 48. A walk test may include walking past a sensor such as a motion sensor in order to attempt to trigger the sensor. The walk test video may be processed using video analytics to determine a time spent on the walk test of the sensor, as indicated at block 50. The video analytics may determine when the person enters and exists an expected field of view of the sensor, and the time spent in the expected field of view of the sensor during the walk test. Trigger events of the sensor are monitored during the walk test, as indicated at block 52. The sensor may include a motion sensor, and the trigger events may each indicate a motion event detected by the sensor. A determination is made as to when a number of trigger events of the sensor is above zero but below an expected number of trigger events for the determined time spent on the walk test of the sensor, and when so, predicting that the sensor will malfunction and sending an alert that the sensor is predicted to malfunction, as indicated at block 54. In some instances, the method 46 may include, in response to receiving the alert, automatically scheduling maintenance and sending a maintenance message to inspect and/or replace the sensor, as indicated at block 56.

Figure 5 is a flow diagram showing an illustrative method 58 for predicting a sensor malfunction of a sensor (such as the sensors 12) in a building control system (such as the building control system 10). The controller 14 may be configured to carry out the method 58. The illustrative method 58 includes monitoring a number of times that a zone of the building control system that includes the sensor was bypassed by a user when activating (e.g. arming) the building control system over a period of time, as indicated at block 60. In some instances, the building control system may be a security system, and the zone of the building control system may be bypassed by the user when the security system is armed by the user. If a particular sensor 12 (or zone including the particular sensor 12) is repeatedly bypassed when arming the security system because the sensor is for example intermittently triggering a false positive as soon as the building control system 10 is activated, this can be an indication that the sensor (or one of the sensors in the bypassed zone) is deteriorating and may malfunction soon. A determination may be made as to when the number of times that the zone that includes the sensor was bypassed by the user over the period of time represents a measure that exceeds a threshold, and when so, predicting that or more sensors in the bypassed zone will malfunction and sending an alert that one or more of the sensors in the bypassed zone is predicted to malfunction, as indicated at block 62.

In some instances, the method 58 may include determining a number of times that the zone that includes the sensor was not bypassed by the user over the period of time, and wherein the threshold is representative of a relationship (e.g. ratio) between the number of times that the zone that includes the sensor was bypassed by the user over the period of time versus the number of times that the zone that includes the sensor was not bypassed by the user over the period of time, as indicated at block 64. In some instances, the method 58 may include, in response to receiving the alert, automatically scheduling maintenance and sending a maintenance message to inspect and/or replace one or more of the sensors in the bypassed zone that includes the sensor, as indicated at block 66.

Figure 6 is a flow diagram showing an illustrative method 68 for predicting a sensor malfunction of a sensor (such as the sensors 12) in a building control system (such as the building control system 10). The controller 14 may be configured to carry out the method 68. The illustrative method 68 includes monitoring trigger events from each sensor of a cross-zone pair of sensors over a period of time, wherein one of the cross-zone pair of sensors includes the sensor, as indicated at block 70. Based on the trigger events from each sensor of the cross-zone pair of sensors over the period of time, a determination is made as to when the sensor is not triggering one or more events, and when so, predicting that the sensor will malfunction and sending an alert that the sensor is predicted to malfunction, as indicated at block 72. In some instances, determining when the sensor is not triggering one or more events based on the trigger events of the cross-zone pair of sensors may include determining when the sensor is missing one or more events based on the trigger events of the other of the cross-zone pair of sensors. In some instances, the method 68 may further include, in response to receiving the alert, automatically scheduling maintenance and sending a maintenance message to inspect and/or replace the sensor, as indicated at block 74.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for predicting a sensor malfunction of a sensor in a building control system, the method comprising one or more of:
(a) predicting the sensor will malfunction by:
monitoring a resistance value associated with the sensor of the building control system for fluctuations in the resistance value over time, the resistance value associated with the sensor having a normal resistance range, wherein the normal resistance range has a central resistance normal region bracketed by an upper resistance normal region and a lower resistance normal region;
determining when the resistance value associated with the sensor begins to deviate into the upper resistance normal region and/or the lower resistance normal region by more than a threshold amount, and when so, predicting that the sensor will malfunction and sending an alert that the sensor is predicted to malfunction;
(b) predicting the sensor will malfunction by:
capturing a walk test of the sensor using a video camera, resulting in a walk test video;
processing the walk test video using video analytics to determine a time spent on the walk test of the sensor;
monitoring trigger events of the sensor during the walk test;
determining when a number of trigger events of the sensor is above zero but below an expected number of trigger events for the determined time spent on the walk test of the sensor, and when so, predicting that the sensor will malfunction and sending an alert that the sensor is predicted to malfunction;
(c) predicting the sensor will malfunction by:
monitoring a number of times that a zone of the building control system that includes the sensor was bypassed by a user when activating the building control system over a period of time;
determining when the number of times that the zone that includes the sensor was bypassed by the user over the period of time represents a measure that exceeds a threshold, and when so, predicting that or more sensors in the bypassed zone will malfunction and sending an alert that one or more of the sensors in the bypassed zone is predicted to malfunction;
(d) predicting the sensor will malfunction by:
monitoring trigger events from each sensor of a cross-zone pair of sensors over a period of time, wherein one of the cross-zone pair of sensors includes the sensor; and
based on the trigger events from each sensor of the cross-zone pair of sensors over the period of time, determining when the sensor is not triggering one or more events, and when so, predicting that the sensor will malfunction and sending an alert that the sensor is predicted to malfunction.

2. The method of claim 1, comprising predicting the sensor will malfunction by:
monitoring the resistance value associated with the sensor of the building control system for fluctuations in the resistance value over time, the resistance value associated with the sensor having the normal resistance range, wherein the normal resistance range has the central resistance normal region bracketed by the upper resistance normal region and the lower resistance normal region; and
determining when the resistance value associated with the sensor begins to deviate into the upper resistance normal region and/or the lower resistance normal region by more than a threshold amount, and when so, predicting that the sensor will malfunction and sending the alert that the sensor is predicted to malfunction.

3. The method of claim 2, wherein the resistance value associated with the sensor comprises a resistance of a cable to the sensor and/or a resistance of a connector to the sensor.

4. The method of claim 2, wherein the resistance value associated with the sensor comprises an input resistance of the sensor.

5. The method of claim 2, wherein determining when the resistance value associated with the sensor begins to deviate into the upper resistance normal region and/or the lower resistance normal region by more than a threshold amount comprises one or more of:
determining when the resistance value crosses into the upper resistance normal region and/or the lower resistance normal region more than a predetermined number of times within a predetermined test period of time; and
determining when the resistance value remains in the upper resistance normal region and/or the lower resistance normal region more than a predetermined amount of time of a predetermined test period of time.

6. The method of claim 2, further comprising:
in response to receiving the alert, automatically scheduling and sending a maintenance message to inspect and/or replace the sensor.

7. The method of claim 1, comprising predicting the sensor will malfunction by:
capturing a walk test of the sensor using a video camera, resulting in a walk test video;
processing the walk test video using video analytics to determine a time spent on the walk test of the sensor;
monitoring trigger events of the sensor during the walk test; and
determining when the number of trigger events of the sensor is above zero but below an expected number of trigger events for the determined time spent on the walk test of the sensor, and when so, predicting that the sensor will malfunction and sending an alert that the sensor is predicted to malfunction.

8. The method of claim 7, wherein the sensor includes a motion sensor, and the trigger events each indicate a motion event detected by the sensor.

9. The method of claim 7, further comprising:
in response to receiving the alert, automatically scheduling and sending a maintenance message to inspect and/or replace the sensor.

10. The method of claim 1, comprising predicting the sensor will malfunction by:
monitoring a number of times that a zone of the building control system that includes the sensor was bypassed by a user when activating the building control system over a period of time; and
determining when the number of times that the zone that includes the sensor was bypassed by the user over the period of time represents a measure that exceeds a threshold, and when so, predicting that one or more sensors in the bypassed zone will malfunction and sending an alert that one or more of the sensors in the bypassed zone is predicted to malfunction.

11. The method of claim 10, wherein the building control system comprises a security system, and the zone of the building control system is bypasses by the user when the security system is armed by the user.

12. The method of claim 10, further comprising determining a number of times that the zone that includes the sensor was not bypassed by the user over the period of time, and wherein the threshold is representative of a relationship between the number of times that the zone that includes the sensor was bypassed by the user over the period of time versus the number of times that the zone that includes the sensor was not bypassed by the user over the period of time.

13. The method of claim 10, further comprising:
in response to receiving the alert, automatically scheduling and sending a maintenance message to inspect and/or replace the one or more of the sensors in the bypassed zone including the sensor.

14. The method of claim 1, comprising predicting the sensor will malfunction by:
monitoring trigger events from each sensor of a cross-zone pair of sensors over a period of time, wherein one of the cross-zone pair of sensors includes the sensor; and
based on the trigger events from each sensor of the cross-zone pair of sensors over the period of time, determining when the sensor is not triggering one or more events, and when so, predicting that the sensor will malfunction and sending an alert that the sensor is predicted to malfunction.

15. The method of claim 14, wherein determining when the sensor is not triggering one or more events based on the trigger events of the cross-zone pair of sensors comprises determining when the sensor is missing one or more events based on the trigger events of the other of the cross-zone pair of sensors.
